# FASCICULE DE BREVET EUROPEEN

(11) **EP 0 520 867 B1**
(45) Date de publication et mention de la délivrance du brevet: **08.02.1995**
(21) Numéro de dépôt: 92401722.1
(22) Date de dépôt: 19.06.1992
(51) Int. Cl.: F16L 59/02

(54) **Gaine pour l'isolation d'un volume de son environnement extérieur et procédé de réalisation d'une telle gaine**
Hülle zur Isolierung eines Raumes gegenüber seiner äusseren Umgebung und Verfahren zur Herstellung derselben
Cover for insulating a volume against its outer environment and method for manufacturing the same

(30) Priorité: 28.06.1991 FR 9108038
(43) Date de publication de la demande: 30.12.1992
(73) Titulaire: AEROSPATIALE Société Nationale Industrielle, 75781 Paris Cédex 16 (FR)
(72) Inventeur: Metivaud, Guy, F-33400 Talence (FR); Decidour, Jean-Claude, F-33480 Castelnau de Medoc (FR)
(74) Mandataire: Bonnetat, Christian

(56) Documents cités:
- DE-A- 1 814 042
- DE-U- 7 908 490
- DE-U- 8 309 223

## Description

La présente invention concerne une gaine pour l'isolation d'un volume de son environnement extérieur, ainsi qu'un procédé de réalisation d'une telle gaine. Elle a pour objet aussi bien d'empêcher que ledit volume influe sur ledit environnement, que d'éviter que ledit environnement intervienne sur ledit volume.

On connaît déjà des gaines d'isolation thermique dans le volume intérieur desquelles sont logées des conduites, lesdites gaines étant constituées de manchons de matière élastique mousse thermiquement isolante. De telles gaines permettent d'éviter que de la chaleur soit transmise par l'environnement extérieur auxdites conduites et, principalement, dans le cas où lesdites conduites véhiculent un fluide chaud, que de la chaleur soit irradiée par lesdites conduites vers l'extérieur de celles-ci. On évite ainsi les déperditions de chaleur dudit fluide chaud.

Dans ces manchons élastiques connus, il est prévu un plan de joint longitudinal, déterminé par une fente radiale. Ainsi, la mise en place des gaines sur les conduites et, inversement, le démontage desdites gaines desdites conduites peuvent être obtenus par écartement élastique des lèvres de ladite fente radiale, pour y passer la canalisation à protéger.

Cependant, dans ces gaines connues, ladite fente radiale constitue un point faible de l'isolation entre lesdites conduites et leur environnement. En effet, de la chaleur peut aisément passer à travers une telle gaine entourant une canalisation, même si apparemment la fente est fermée. De plus, dans le cas où un feu se produit dans cet environnement extérieur, ce feu ou les flammes qui en résultent peuvent atteindre, et éventuellement détruire (notamment au niveau des joints entre les tronçons de canalisation), ladite canalisation à travers ladite fente, même si la matière de la gaine résiste bien au feu et aux flammes.

On remarquera que le document DE-GM-7908490 décrit une gaine pour l'isolation d'un volume de son environnement extérieur, comportant une lente longitudinale déterminant un plan de joint et réalisée en une matière isolante élastiquement déformable, ledit plan de joint formant une chicane, dont la section contenue dans un plan perpendiculaire à l'axe de la gaine présente au moins une partie intermédiaire, de direction générale au moins sensiblement transversale par rapport à l'épaisseur de la paroi de ladite gaine, et deux lignes d'extrémité de direction au moins sensiblement parallèle à ladite épaisseur de la paroi de ladite gaine, lesdites lignes reliant les extrémités de ladite partie intermédiaire, respectivement à la surface extérieure et à la surface intérieure de ladite gaine.

Grâce à un tel plan de joint particulier, le point faible d'isolation, constitué par le plan de joint des autres gaines connues, devrait donc être éliminé.

Cependant, la gaine du document allemand précité est formée par une pièce homogène constituée d'une mousse de polyéthylène, de chlorure de polyvinyle ou de caoutchouc. Il résulte de la faible élasticité de telles mousses que les lèvres du plan de joint restent écartées l'une de l'autre et que le point faible d'isolation subsiste. De plus, la forme particulière du plan de joint complique fortement, à moins qu'elle ne l'empêche, la fabrication d'une telle gaine homogène de mousse. On remarquera que ce document antérieur n'indique aucun procédé de fabrication.

La présente invention a pour objet de remédier à ces inconvénients.

A cette fin, selon l'invention, la gaine du type ci-dessus est caractérisée en ce qu'elle est constituée de couches successives d'une matière souple imprégnée d'un liant polymérisable, présentant, après polymérisation, des propriétés d'élasticité aptes à assurer l'appui spontané des lèvres de ladite fente.

Du fait que la matière constitutive de ladite gaine selon l'invention est élastique, les lèvres de la fente s'appliquent donc spontanément l'une contre l'autre pour fermer ladite gaine. Cependant, dans certains cas, il peut être avantageux de prévoir une application forcée desdites lèvres l'une contre l'autre. A cet effet, les faces en regard desdites lèvres, notamment leurs parties correspondant à ladite partie intermédiaire du plan de joint, peuvent être fixées l'une à l'autre par exemple par collage ou pourvues de moyens de solidarisation amovible. De tels moyens peuvent par exemple être constitués par des moyens de fixation rapide à boucles et crochets coopérants, du type par exemple connu sous la marque VELCRO.

Par ailleurs, ladite partie intermédiaire du plan de joint, au lieu d'être continue, peut être formée d'au moins deux portions, de direction générale au moins sensiblement transversale par rapport à l'épaisseur de la paroi de ladite gaine, disposées à des niveaux différents et reliées l'une à l'autre par une ligne de jonction, de direction au moins sensiblement parallèle à l'épaisseur de la paroi de ladite gaine.

Pour réaliser une gaine d'isolation conforme à la présente invention, on peut :
- réaliser un mandrin dont la forme extérieure correspond au volume à isoler ;
- appliquer sur ledit mandrin des couches successives d'une matière souple imprégnée d'un liant polymérisable, présentant des propriétés d'élasticité après polymérisation ;
- intercaler entre les couches successives de ladite matière souple, au moins un séparateur dont la section mince correspond à ladite partie intermédiaire' du plan de joint, ledit séparateur étant en une matière sur laquelle n'adhère pas ledit liant polymérisable.
- procéder à la polymérisation dudit liant ;
- pratiquer des incisions dans l'épaisseur desdites couches, correspondant respectivement auxdites lignes d'extrémité de la section, du plan de joint, de part et d'autre dudit séparateur ; et
- éliminer ledit séparateur et dégager ladite gaine dudit mandrin par écartement élastique des lèvres ainsi formées.

On remarquera que, du fait que la gaine est séparée du mandrin par écartement élastique des lèvres de ladite gaine, celle-ci peut présenter toute forme ou toute section désirées.

De préférence, on commence par réaliser l'incision correspondant à ladite ligne d'extrémité reliant ladite partie intermédiaire à la surface extérieure de la gaine, on élimine ledit séparateur, puis on pratique l'incision correspondant à ladite ligne d'extrémité reliant ladite partie intermédiaire à la surface intérieure de ladite gaine.

Dans le cas où ladite partie intermédiaire du plan de joint comporte au moins deux portions de direction générale au moins sensiblement transversale par rapport à l'épaisseur de la paroi de ladite gaine, reliées deux à deux par une ligne de jonction de direction au moins sensiblement parallèle à ladite épaisseur, on peut :
- intercaler entre les couches successives de ladite matière souple au moins deux séparateurs dont les sections minces correspondent respectivement auxdites portions de ladite partie intermédiaire ;
- puis, après polymérisation du liant, pratiquer des incisions correspondant respectivement auxdites lignes d'extrémité et auxdites lignes de jonction de la section du plan de joint.

Pour des raisons de commodité, il est alors avantageux de :
- commencer par pratiquer l'incision correspondant à ladite ligne d'extrémité reliant la première desdites portions à la surface extérieure de la gaine ;
- éliminer le premier séparateur ;
- pratiquer l'incision correspondant à ladite ligne de jonction entre lesdites première et deuxième portions ;
- éliminer le deuxième séparateur ;
- successivement, de manière analogue, pratiquer les incisions correspondant aux autres lignes de jonction et éliminer les troisième à dernier séparateurs éventuels, puis pratiquer l'incision correspondant à ladite ligne d'extrémité reliant la dernière desdites portions à la surface intérieure de la graine.

Dans une variante de mise en oeuvre, on peut :
- réaliser un mandrin dont la forme extérieure correspond au volume à isoler ;
- appliquer sur ledit mandrin des couches successives d'une matière souple imprégnée d'un liant polymérisable, présentant des propriétés d'élasticité après polymérisation ;
- intercaler entre les couches successives de ladite matière souple, au moins un séparateur dont la section mince correspond à ladite partie intermédiaire du plan de joint, ledit séparateur étant constitué de deux couches coopérantes d'un moyen de fixation rapide à boucles et crochets coopérants ;
- procéder à la polymérisation dudit liant ; et
- pratiquer des incisions, correspondant respectivement auxdites lignes d'extrémité de la section du plan de joint, de part et d'autre dudit séparateur.

Ainsi, après polymérisation du liant, chaque couche du moyen de fixation rapide est rendue solidaire d'une des lèvres de la fente de la gaine, de sorte que lesdites lèvres sont fixées l'une à l'autre par ledit moyen de fixation rapide. Les lèvres peuvent donc, à volonté, être écartées l'une de l'autre par séparation des deux couches dudit moyen de fixation rapide ou bien être fixées l'une à l'autre par ce dernier moyen.

De préférence, on commence par réaliser l'incision correspondant à ladite ligne d'extrémité reliant ladite partie intermédiaire à la surface extérieure de la gaine, on écarte l'une de l'autre les deux couches du moyen de fixation rapide, puis on pratique l'incision correspondant à ladite ligne d'extrémité reliant ladite partie intermédiaire à la surface intérieure de ladite gaine.

Dans le cas où ladite partie intermédiaire du plan de joint comporte au moins deux portions de direction générale au moins sensiblement transversale par rapport à l'épaisseur de la paroi de ladite gaine, reliées deux à deux par une ligne de jonction de direction au moins sensiblement parallèle à ladite épaisseur, on peut, de façon semblable à ce qui a été dit ci-dessus :
- intercaler entre les couches successives de ladite matière souple au moins deux séparateurs dont les sections minces correspondent respectivement auxdites portions de ladite partie intermédiaire, chaque séparateur étant constitué de deux couches coopérantes d'un moyen de fixation rapide à boucles et crochets coopérantes ;
- puis, après polymérisation du liant, pratiquer des incisions correspondant respectivement auxdites lignes d'extrémité et auxdites lignes de jonction de la section du plan de joint.

Pour des raisons de commodité, il est alors avantageux de :
- commencer par pratiquer l'incision correspondant à ladite ligne d'extrémité reliant la première desdites portions à la surface extérieure de la gaine ;
- séparer par écartement les couches du premier séparateur ;
- pratiquer l'incision correspondant à ladite ligne de jonction entre lesdites première et deuxième portions ;
- séparer par écartement les couches du deuxième séparateur ;
- successivement, de manière analogue, pratiquer les incisions correspondant aux autres lignes de jonction et séparer par écartement les couches des troisième à dernier séparateurs éventuels, puis
- pratiquer l'incision correspondant à ladite ligne d'extrémité reliant ladite dernière desdites portions à la surface intérieure de la gaine.

La gaine conforme à la présente invention isole son volume intérieur de son environnement extérieur. Si elle présente une forme tubulaire, elle forme donc en elle-même une conduite. Dans ce cas, il est avantageux que les lèvres de sa fente soient solidarisées l'une de l'autre, notamment par collage, comme cela a été mentionné ci-dessus.

Toutefois, la gaine conforme à la présente invention peut également être utilisée comme gaine de protection d'un objet, dont le volume correspond au moins approximativement au volume intérieur de ladite gaine. La gaine est alors mise en place autour dudit objet par écartement des lèvres de ladite fente.

En position sur un tel objet à protéger, lesdites lèvres doivent être appliquées l'une contre l'autre pour former le plan de joint en chicane et assurer l'isolation maximale. Pour ce faire, il est indispensable que la forme extérieure du mandrin soit au moins égale à celle de l'objet à protéger, pour éviter le baîllement desdites lèvres.

De préférence, la forme extérieure du mandrin est identique à celle de l'objet à protéger, afin que la gaine s'adapte exactement audit objet.

Lorsque la gaine conforme à l'invention est destinée à protéger son volume intérieur, ou l'objet qu'il contient, contre les flammes, il est avantageux que la matière souple soit formée par un matelas constitué par la superposition d'une pluralité de couches de tissus en fibres organiques oxydées carbonisables, au moins une face dudit matelas étant recouverte d'un liant à base de silicone. Une telle matière est décrite en détail dans la demande de brevet français n° 90 10518 déposée le 21 Août 1990 (famille de EP-A-0 473 487, document état de la technique selon Article 54(3) CBE), le liant étant alors avantageusement celui décrit dans le document FR-A 2 632 866.

L'application de la matière souple sur le mandrin peut être obtenue de toute manière connue, notamment par enroulement, drapage, etc...

Les figures du dessin annexé feront bien comprendre comment l'invention peut être réalisée. Sur ces figures, des références identiques désignent des éléments identiques ou semblables.

La figure 1 montre, en perspective schématique, un tronçon de canalisation cylindrique pourvue d'une gaine d'isolation et de protection conforme à la présente invention.

Les figures 2A à 2E illustrent schématiquement, en coupe transversale, le processus de fabrication de la gaine montrée par la figure 1.

La figure 3 montre schématiquement, en coupe transversale, une variante de réalisation de la gaine de la figure 1.

Les figures 4A, 4B et 4C illustrent schématiquement, en coupe transversale, des variantes de processus de fabrication d'un autre mode de réalisation de la gaine conforme à la présente invention.

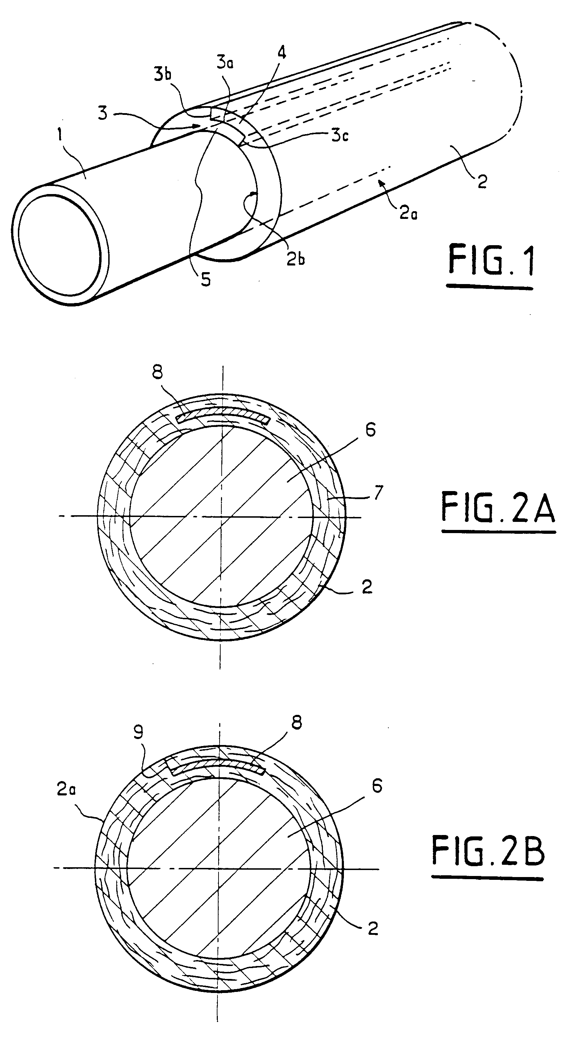

Dans l'exemple de réalisation de l'invention, montré par la figure 1, un objet à isoler de son environnement est constitué par une canalisation cylindrique 1. A cet effet, la canalisation 1 est revêtue d'une gaine 2 en une matière élastique, appropriée à protéger la canalisation 1 contre des agressions extérieures (feu, flammes, transmission de chaleur, etc...) et/ou à protéger l'environnement de ladite canalisation contre un fluide chaud circulant dans la conduite 1.

Comme on peut le voir sur la figure, la gaine 2 comporte une fente longitudinale déterminant un plan de joint 3 comportant une partie intermédiaire 3a, de direction au moins sensiblement transversale par rapport à l'épaisseur de la paroi de la gaine 2, et deux lignes d'extrémité 3b et 3c, au moins sensiblement parallèles à l'épaisseur de la paroi de la gaine 2 et reliant les extrémités de la partie intermédiaire 3a, respectivement à la surface extérieure 2a et à la surface intérieure 2b de ladite gaine 2.

En position sur la canalisation 1, les lèvres 4 et 5 de la gaine 2 sont appliquées l'une contre l'autre pour former ledit plan de joint 3.

Pour réaliser la gaine 2 montrée par la figure 1, on commence par réaliser un mandrin cylindrique 6, dont le diamètre extérieur est au moins égal, et de préférence égal, au diamètre extérieur de la canalisation 1.

Sur le mandrin 6, on applique par toute méthode connue des couches successives 7 de la matière constitutive de la gaine 2, ladite matière étant souple et imprégnée d'un liant polymérisable présentant des qualités d'élasticité, lorsqu'il est polymérisé.

Pendant l'application des couches successives 7, on intercale, par exemple à mi-épaisseur de la paroi de la gaine 2, un séparateur mince 8, par exemple formé par un plat métallique incurvé, sur lequel ledit liant n'adhère pas (figure 2A).

Lorsque l'épaisseur souhaitée pour des couches successives 7 superposées est obtenue, on procède à la polymérisation dudit liant.

Ensuite, on pratique une incision longitudinale 9, (correspondant à la ligne 3b), reliant une extrémité latérale du séparateur 8 à la surface extérieure 2a de la gaine 2 (figure 2B).

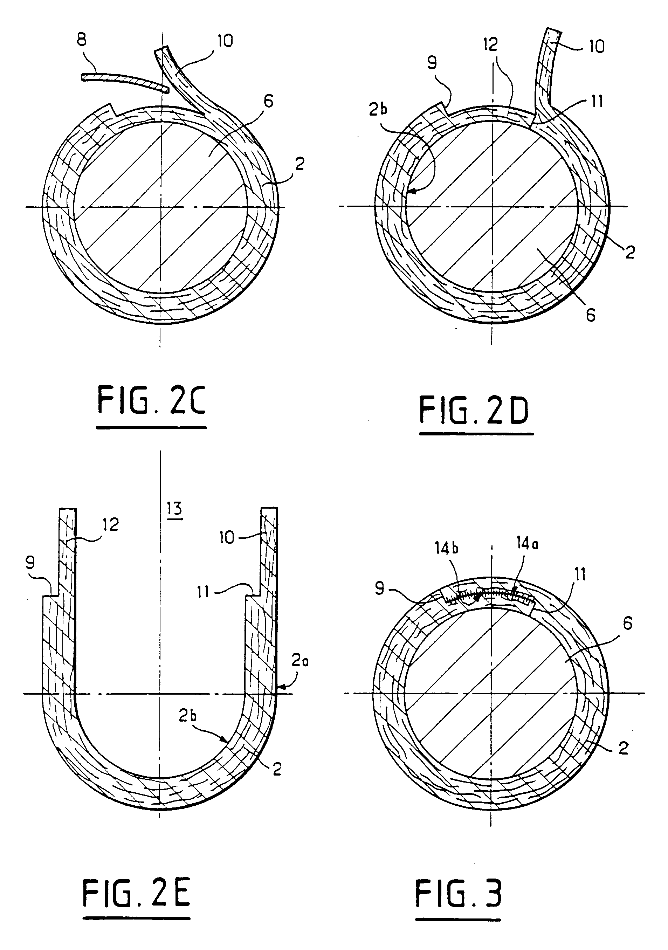

Il est alors possible, en soulevant élastiquement la languette de matière 10 ainsi formée par la matière recouvrant le séparateur 8, de retirer ce dernier (figure 2C).

En maintenant ladite languette 10 soulevée, on peut de plus pratiquer une incision longitudinale 11 (correspondant à la ligne 3c) reliant la base de la languette 10 à la surface intérieure 2b de la gaine 2 (figure 2D).

On peut alors soulever élastiquement la languette 12 (formée par la matière de la gaine 2 disposée initialement entre le séparateur 8 et le mandrin 6), et écarter les lèvres 4 et 5 de la gaine 2 (respectivement formées par la languette 12 et la ligne d'incision 9, d'une part, et par la languette 10 et la ligne d'incision 11, d'autre part), pour former une fente large 13 à travers laquelle on peut extraire le mandrin 6, par déformation élastique de la gaine 2 (figure 2E).

Pour mettre en place la gaine 2 sur la canalisation 1, il suffit, après avoir écarté les lèvres 4 et 5 de la façon décrite ci-dessus pour l'extraction du mandrin 6, d'introduire ladite canalisation dans la fente large 13. Lorsque l'on relâche les lèvres 4 et 5, elles viennent s'appliquer élastiquement l'une contre l'autre pour former le plan du joint 3.

Sur la figure 3, on a représenté une variante de réalisation dans laquelle le séparateur 8 est remplacé par deux couches coopérantes 14a et 14b d'un moyen de fixation rapide à boucles et crochets coopérants, respectivement solidaires des faces en regard des languettes 10 et 12. Ainsi, la partie intermédiaire 3a du plan de joint 3 peut être fixe, les languettes 10 et 12 étant fixées de façon amovible l'une par rapport à l'autre. Dans ce cas, pour réaliser l'incision 11, on sépare l'une de l'autre par écartement les deux couches coopérantes du séparateur 14a, 14b en soulevant la languette 10 (comme sur la figure 2D), après réalisation de l'incision 9.

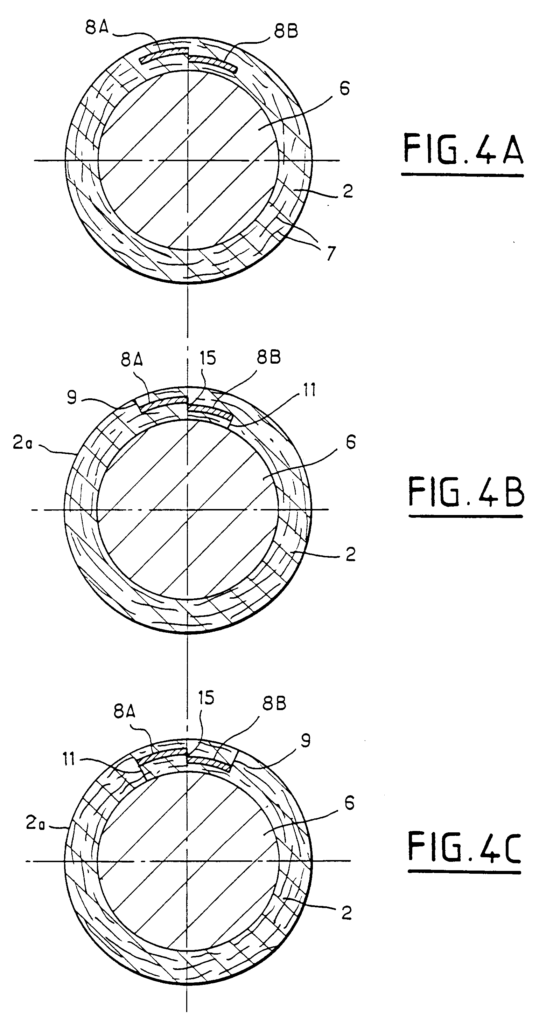

Dans la variante de réalisation de la figure 4A (qui correspond à la figure 2A), le séparateur unique 8 est remplacé par deux séparateurs individuels 8A et 8B, adjacents, mais décalés en épaisseur dans la paroi de la gaine 2.

Comme le montrent les figures 4B et 4C, l'incision 9 est alors réalisée entre l'extrémité latérale du séparateur 8A (le moins profond) ou 8B (le plus profond), opposée à l'autre séparateur, et la surface extérieure 2a de la gaine 2 et l'incision 11 est réalisée entre l'extrémité latérale du séparateur 8B ou 8A, opposée à l'autre séparateur et la surface intérieure 2b de la gaine 2.

De plus, entre les bords en regard des séparateurs 8A et 8B on pratique une incision transversale supplémentaire 15, de direction longitudinale, reliant lesdits séparateurs 8A et 8B.

Dans les deux cas des figures 4B et 4C, d'une façon qui se déduit aisément de ce qui a été décrit ci-dessus, on commence par pratiquer l'incision 9, puis on soulève la languette ainsi délimitée entre la surface extérieure 2a et le séparateur correspondant 8A ou 8B pour pratiquer l'incision 15, après quoi en soulevant la plus grande languette délimitée entre la surface extérieure 2a et les séparateurs 8A et 8B, on pratique l'incision 11. On obtient ainsi un plan de joint dont la partie intermédiaire 3a est formée de deux portions (correspondant respectivement aux séparateurs 8A et 8B), de direction générale au moins sensiblement transversale à l'épaisseur de la paroi de la gaine 2, disposées à des niveaux différents et reliées l'une à l'autre par une ligne de jonction (incision 15), de direction au moins sensiblement parallèle à l'épaisseur de la paroi de ladite gaine. Il est aisé de retirer la gaine 2 du mandrin 6 et de la mettre en place sur la canalisation 1, de la façon décrite ci-dessus.

Ainsi, grâce à la présente invention, la gaine 2 est pourvue d'un plan de joint 3 en chicane, renforçant la protection de ladite canalisation 1 en regard de celui-ci. La forme de cette chicane peut être simple (figures 1 et 3) ou plus complexe (figures 4B et 4C).

On comprendra aisément que, à la place des deux séparateurs 8A et 8B, il est possible d'utiliser une pluralité de séparateurs 8i non représentés (avec i = 1 à n), disposés à des profondeurs différentes dans la paroi de la gaine 2 et deux à deux reliés par une incision 15. On commencera alors par pratiquer l'incision 9, puis successivement les différentes incisions 15, puis finalement l'incision 11. On obtiendra ainsi une chicane de forme encore plus complexe et donc plus efficace.

De plus, à la place des séparateurs 8A et 8B ou 8i, il est bien entendu possible d'utiliser deux ou n séparateurs semblables au séparateur 14a, 14b. Les incisions 15 et l'incision 11 sont alors pratiquées successivement, après ouverture successive des différents séparateurs 14a, 14b.

Sur les dessins, à des fins de clarté, l'épaisseur des séparateurs 8, 8A, 8B et 14a, 14b a été exagérée.

Il va de soi que si la canalisation 1 est très longue, la gaine 2 peut être constituée d'une pluralité de tronçons successifs dont les extrémités adjacentes sont emboîtées les unes dans les autres. A cet effet, on peut prévoir auxdites extrémités des épaulements externes et internes pour former des extrémités mâles et des extémités femelles. Eventuellement, de telles extrémités mâles et femelles peuvent être réalisées par inclusion de séparateurs annulaires dans l'épaisseur desdites extrémités (à la manière du séparateur 8) et élimination de la partie de la gaine 2 se trouvant à l'aplomb desdits séparateurs annulaires. Ainsi, si la partie de gaine 2 éliminée se trouve du côté extérieur de celle-ci, on obtient une extrémité mâle. En revanche, si la partie de gaine 2 éliminée se trouve du côté intérieur de celle-ci, on obtient une extrémité femelle.

Par ailleurs, on comprendra aisément que si la canalisation 1 de la figure 1 est supprimée, la gaine 2 forme par elle-même une conduite isolant son volume intérieur de l'environnement de ladite gaine. Celle-ci, notamment lorsque les lèvres de sa fente sont solidarisées l'une de l'autre, peut alors faire office de conduite isolante.

## Revendications

1. Gaine (2) pour l'isolation d'un volume de son environnement extérieur, comportant une fente longitudinale déterminant un plan de joint (3) et réalisée en une matière isolante élastiquement déformable, ledit plan de joint (3) formant une chicane, dont la section contenue dans un plan perpendiculaire à l'axe de la gaine présente au moins une partie intermédiaire (3a), de direction générale au moins sensiblement transversale par rapport à l'épaisseur de la paroi de ladite gaine, et deux lignes d'extrémité (3b,3c) de direction au moins sensiblement parallèle à ladite épaisseur de la paroi de ladite gaine, lesdites lignes reliant les extrémités de ladite partie intermédiaire, respectivement à la surface extérieure (2a) et à la surface intérieure (2b) de ladite gaine,
caractérisée en ce que ladite gaine est constituée de couches successives (7) d'une matière souple imprégnée d'un liant polymérisable, présentant, après polymérisation, des propriétés d'élasticité aptes à assurer l'appui spontané des lèvres de ladite fente.

2. Gaine selon la revendication 1,
caractérisée en ce que les faces en regard desdites lèvres sont fixées l'une à l'autre.

3. Gaine selon la revendication 1,
caractérisée en ce que les faces en regard desdites lèvres sont pourvues au moins partiellement de moyens de solidarisation amovible (14a,14b).

4. Gaine selon l'une des revendications 1 à 3,
caractérisée en ce que ladite partie intermédiaire (3a) du plan de joint est formée d'au moins deux portions, de direction générale au moins sensiblement transversale par rapport à l'épaisseur de la paroi de ladite gaine, disposées à des niveaux différents et reliées l'une à l'autre par une ligne de jonction, de direction au moins sensiblement parallèle à l'épaisseur de la paroi de ladite gaine.

5. Gaine selon l'une quelconque des revendications 1 à 4, destinée à protéger ledit volume contre les flammes, caractérisée en ce qu'elle est réalisée en une matière formée par un matelas constitué par la superposition d'une pluralité de couches de tissus en fibres organiques oxydées carbonisables, au moins une face dudit matelas étant recouverte d'un liant à base de silicone.

6. Procédé pour la réalisation de la gaine spécifiée sous l'une quelconque des revendications 1, 2, 4 et 5, caractérisé en ce qu'il consiste à :
- réaliser un mandrin (6) dont la forme extérieure correspond au volume à isoler ;
- appliquer sur ledit mandrin des couches successives (7) d'une matière souple imprégnée d'un liant polymérisable, présentant des propriétés d'élasticité après polymérisation ;
- intercaler entre les couches successives de ladite matière souple, au moins un séparateur (8) dont la section mince correspond à ladite partie intermédiaire du plan de joint, ledit séparateur étant en une matière sur laquelle n'adhère pas ledit liant polymérisable ;
- procéder à la polymérisation dudit liant ;
- pratiquer des incisions (9,11), dans l'épaisseur desdites couches, correspondant respectivement auxdites lignes d'extrémité (3b,3c) de la section du plan de joint, de part et d'autre dudit séparateur ; et
- éliminer ledit séparateur et dégager ladite gaine dudit mandrin par écartement élastique des lèvres ainsi formées.

7. Procédé selon la revendication 6,
caractérisé en ce qu'on commence par réaliser l'incision (9) correspondant à ladite ligne d'extrémité (3b) reliant ladite partie intermédiaire (3a) à la surface extérieure (2a) de la gaine, on élimine ledit séparateur (8), puis on pratique l'incision (11) correspondant à ladite ligne d'extrémité (3c) reliant ladite partie intermédiaire (3a) à la surface intérieure (2b) de ladite gaine.

8. Procédé selon la revendication 6, pour la réalisation d'une gaine dans laquelle ladite partie intermédiaire (3a) du plan de joint comporte au moins deux portions de direction générale au moins sensiblement transversale par rapport à l'épaisseur de la paroi de ladite gaine, reliées deux à deux par une ligne de jonction de direction au moins sensiblement parallèle à ladite épaisseur, caractérisé en ce qu'il consiste à :
- intercaler entre les couches successives (7) de ladite matière souple au moins deux séparateurs (8A,8B) dont les sections minces correspondent respectivement auxdites portions de ladite partie intermédiaire ;
- puis, après polymérisation du liant, pratique des incisions (9,11,15) correspondant respectivement auxdites lignes d'extrémité et auxdites lignes de jonction de la section du plan de joint.

9. Procédé selon la revendication 8,
caractérisé en ce qu'il consiste à :
- commencer par pratiquer l'incision correspondant à ladite ligne d'extrémité (3b) reliant la première desdites portions à la surface extérieure (2a) de la gaine ;
- éliminer le premier séparateur (8A) ;
- pratiquer l'incision (15) correspondant à ladite ligne de jonction entre lesdites première et deuxième portions ;
- éliminer le deuxième séparateur (8B) ;
- successivement, de manière analogue, pratiquer les incisions (15) correspondant aux autres lignes de jonction et éliminer les troisième à dernier séparateurs éventuels, puis pratiquer l'incision (11) correspondant à ladite ligne d'extrémité (3c) reliant la dernière desdites portions à la surface intérieure (2b) de la gaine.

10. Procédé pour la réalisation de la gaine spécifiée sous l'une quelconque des revendications 1, 3, 4 et 5, caractérisé en ce qu'il consiste à :
- réaliser un mandrin (6) dont la forme extérieure correspond au volume à isoler ;
- appliquer sur ledit mandrin des couches successives (7) d'une matière souple imprégnée d'un liant polymérisable, présentant des propriétés d'élasticité après polymérisation ;
- intercaler entre les couches successives de ladite matière souple, au moins un séparateur (14a,14b) dont la section mince correspond à ladite partie intermédiaire du plan de joint, ledit séparateur étant constitué de deux couches coopérantes d'un moyen de fixation rapide à boucles et crochets coopérants ;
- procéder à la polymérisation dudit liant ; et
- pratiquer des incisions (9,11), correspondant respectivement auxdites lignes d'extrémité (3b,3c) de la section du plan de joint, de part et d'autre dudit séparateur.

11. Procédé selon la revendication 10,
caractérisé en ce qu'on commence par réaliser l'incision (9) correspondant à ladite ligne d'extrémité (3b) reliant ladite partie intermédiaire (3a) à la surface extérieure (2a) de la gaine, on écarte l'une de l'autre les deux couches (14a,14b) du moyen de fixation rapide, puis on pratique l'incision (11) correspondant à ladite ligne d'extrémité (3c) reliant ladite partie intermédiaire (3a) à la surface intérieure (2b) de ladite gaine.

12. Procédé selon la revendication 11, pour la réalisation d'une gaine dans laquelle ladite partie intermédiaire (3a) du plan de joint comporte au moins deux portions de direction générale au moins sensiblement transversale par rapport à l'épaisseur de la paroi de ladite gaine, reliées deux à deux par une ligne de jonction de direction au moins sensiblement parallèle à ladite épaisseur, caractérisé en ce qu'il consiste à :
- intercaler entre les couches successives (7) de ladite matière souple au moins deux séparateurs (14a,14b) dont les sections minces correspondent respectivement auxdites portions de ladite partie intermédiaire, chaque séparateur étant constitué de deux couches coopérantes d'un moyen de fixation rapide à boucles et crochets coopérants ;
- puis, après polymérisation du liant, pratiquer des incisions (9,11,15) correspondant respectivement auxdites lignes d'extrémité et auxdites lignes de jonction de la section du plan de joint.

13. Procédé selon la revendication 12,
caractérisé en ce qu'il consiste à :
- commencer par pratiquer l'incision (9) correspondant à ladite ligne d'extrémité reliant la première desdites portions à la surface extérieure de la gaine ;
- séparer par écartement les couches du premier séparateur ;
- pratiquer l'incision (15) correspondant à ladite ligne de jonction entre lesdites première et deuxième portions ;
- séparer par écartement les couches du deuxième séparateur ;
- successivement, de manière analogue, pratiquer les incisions (15) correspondant aux autres lignes de jonction et séparer par écartement les couches des troisième à dernier séparateurs éventuels, puis
- pratiquer l'incision (11) correspondant à ladite ligne d'extrémité reliant ladite dernière desdites portions à la surface intérieure de la gaine.

14. Procédé selon l'une quelconque des revendications 6 à 13,
caractérisé en ce que la forme extérieure du mandrin (6) est identique à celle d'un objet (1) à protéger, sur lequel ladite gaine est mise en place par écartement élastique des lèvres de ladite fente.

15. Procédé selon l'une quelconque des revendications 6 à 14, destiné à la réalisation d'une gaine pare-flamme, caractérisé en ce que la matière souple appliquée sur ledit mandrin est un matelas qui est constitué par la superposition d'une pluralité de couches de tissus en fibres organiques oxydées carbonisables et dont au moins une face est recouverte d'un liant à base de silicone.

## Claims

1. Jacket (2) for the insulation of a volume from its external environment, including a longitudinal slit defining a parting line (3) and made of an elastically deformable insulating material, the said parting line (3) forming a chicane, whose cross-section contained in a plane perpendicular to the axis of the jacket exhibits at least one intermediate part (3a), of general direction at least substantially transverse with respect to the thickness of the wall of the said jacket, and two end lines (3b, 3c) of direction at least substantially parallel to the said thickness of the wall of the said jacket, the said end lines connecting the ends of the said intermediate part, respectively to the external surface (2a) and to the internal surface (2b) of the said jacket, characterized in that the said jacket is constituted by successive layers (7) of a flexible material impregnated with a polymerizable binder, exhibiting, after polymerization, elasticity properties suitable for ensuring the spontaneous bearing of the lips of the said slit.

2. Jacket according to Claim 1, characterized in that the facing faces of the said lips are fixed to each other.

3. Jacket according to Claim 1, characterized in that the facing faces of the said lips are provided, at least partially, with removable fastening means (14a, 14b).

4. Jacket according to one of Claims 1 to 3, characterized in that the said intermediate part (3a) of the parting line is formed by at least two portions, of general direction at least substantially transverse with respect to the thickness of the wall of the said jacket, these portions being arranged at different levels and connected to each other by a junction line, of direction at least substantially parallel to the thickness of the wall of the said jacket.

5. Jacket according to any one of Claims 1 to 4, intended to protect the said volume from flames, characterized in that it is made of a material formed by a mat constituted by the superposition of a plurality of layers of fabrics made of carbonizable oxidized organic fibres, at least one face of the said mat being covered with a silicone-based binder.

6. Method for the production of the jacket specified by any one of Claims 1, 2, 4 and 5, characterized in that it consists in:
- producing a mandrel (6) whose external shape corresponds to the volume to be insulated;
- applying, to the said mandrel, successive layers (7) of a flexible material impregnated with a polymerizable binder, exhibiting elasticity properties after polymerization;
- inserting, between the successive layers of the said flexible material, at least one separator (8) whose thin cross-section corresponds to the said intermediate part of the parting line, the said separator being made of a material to which the said polymerizable binder does not adhere;
- carrying out the polymerization of the said binder;
- making incisions (9, 11), in the thickness of the said layers, corresponding respectively to the said end lines (3b, 3c) of the cross-section of the parting line, on either side of the said separator; and
- removing the said separator and freeing the said jacket from the said mandrel by elastic parting of the lips thus formed.

7. Method according to Claim 6, characterized in that the starting point is to make the incision (9) corresponding to the said end line (3b) connecting the said intermediate part (3a) to the external surface (2a) of the jacket, the said separator (8) is removed, and then the incision (11) corresponding to the said end line (3c) connecting the said intermediate part (3a) to the internal surface (2b) of the said jacket is made.

8. Method according to Claim 6, for the production of a jacket in which the said intermediate part (3a) of the parting line includes at least two portions of general direction at least substantially transverse with respect to the thickness of the wall of the said jacket, these portions being connected in pairs by a junction line of direction at least substantially parallel to the said thickness, characterized in that it consists in:
- inserting, between the successive layers (7) of the said flexible material, at least two separators (8A, 8B) whose thin cross-sections correspond respectively to the said portions of the said intermediate part;
- and then, after polymerization of the binder, making incisions (9, 11, 15) corresponding respectively to the said end lines and to the said junction lines of the cross-section of the parting line.

9. Method according to Claim 8, characterized in that it consists in:
- starting by making the incision corresponding to the said end line (3b) connecting the first of the said portions to the external surface (2a) of the jacket;
- removing the first separator (8A);
- making the incision (15) corresponding to the said junction line between the said first and second portions;
- removing the second separator (8B);
- successively, in a similar manner, making the incisions (15) corresponding to the other junction lines and removing the third to last possible separators, and then making the incision (11) corresponding to the said end line (3c) connecting the last of the said portions to the internal surface (2b) of the jacket.

10. Method for the production of the jacket specified by any one of Claims 1, 3, 4 and 5, characterized in that it consists in:
- producing a mandrel (6) whose external shape corresponds to the volume to be insulated;
- applying, to the said mandrel, successive layers (7) of a flexible material impregnated with a polymerizable binder, exhibiting elasticity properties after polymerization;
- inserting, between the successive layers of the said flexible material, at least one separator (14a, 14b) whose thin cross-section corresponds to the said intermediate part of the parting line, the said separator being constituted by two interacting layers of a rapid fixing means having interacting hooks and loops;
- carrying out the polymerization of the said binder, and
- making incisions (9, 11) corresponding respectively to the said end lines (3b, 3c) of the cross-section of the parting line, on either side of the said separator.

11. Method according to Claim 10, characterized in that the starting point is to make the incision (9) corresponding to the said end line (3b) connecting the said intermediate part (3a) to the external surface (2a) of the jacket, the two layers (14a, 14b) of the rapid fixing means are parted from each other, and then the incision (11) corresponding to the said end line (3c) connecting the said intermediate part (3a) to the internal surface (2b) of the said jacket is made.

12. Method according to Claim 11, for the production of a jacket in which the said intermediate part (3a) of the parting line includes at least two portions of general direction at least substantially transverse with respect to the thickness of the wall of the said jacket, these portions being connected in pairs by a junction line of direction at least substantially parallel to the said thickness, characterized in that it consists in:
- inserting, between the successive layers (7) of the said flexible material, at least two separators (14a, 14b) whose thin cross-sections correspond respectively to the said portions of the said intermediate part, each separator being constituted by two interacting layers of a rapid fixing means having interacting hooks and loops;
- and then, after polymerization of the binder, making incisions (9, 11, 15) corresponding respectively to the said end lines and to the said junction lines of the cross-section of the parting line.

13. Method according to Claim 12, characterized in that it consists in:
- starting by making the incision (9) corresponding to the said end line connecting the first of the said portions to the external surface of the jacket,
- separating the layers from the first separator, by parting;
- making the incision (15) corresponding to the said junction line between the said first and second portions;
- separating the layers from the second separator, by parting,
- successively, in a similar manner, making the incisions (15) corresponding to the other junction lines and separating the layers from the third to final possible separators, by parting, and then
- making the incision (11) corresponding to the said end line connecting the said last of the said portions to the internal surface of the jacket.

14. Method according to any one of Claims 6 to 13, characterized in that the external shape of the mandrel (6) is identical to that of an article (1) to be protected, on which the said jacket is installed by elastic parting of the lips of the said slit.

15. Method according to any one of Claims 6 to 14, intended for the production of a flame-barrier jacket, characterized in that the flexible material applied to the said mandrel is a mat which is constituted by the superposition of a plurality of layers of fabrics made of carbonizable oxidized organic fibres and at least one face of which is covered with a silicone-based binder.

## Patentansprüche

1. Mantel (2) zur Isolierung eines Volumens gegenüber seiner äußeren Umgebung, mit einem Längsspalt, durch den eine Fugenebene (3) bestimmt wird, und der aus einem elastisch verformbaren Isoliermateriel hergestellt ist, wobei die Fugenebene (3) eine Zickzackform hat, deren in einer Ebene senkrecht zur Mantelachse gelegener Querschnitt wenigstens ein Zwischenteil (3a), dessen allgemeine Richtung wenigstens annähernd quer zur Dicke der Mantelwand verläuft, und zwei Endlinien (3b,3c) aufweist, deren Richtung wenigstens annähernd parallel zur Dicke der Mantelnwand verläuft, wobei durch die Linien die Enden des Zwischenteils mit der Außenfläche (2a) bzw. der Innenfläche (2b) des Mantels verbunden werden,
dadurch gekennzeichnet, daß der Mantel aus aufeinanderfolgenden Schichten (7) eines mit einem polymerisierbaren Bindemittel imprägnierten Materials besteht, das nach der Polymerisation Elastizitätseigenschaften aufweist, durch die ein spontanes Anlegen der Lippen des Spalts gewährleistet werden kann.

2. Mantel nach Anspruch 1,
dadurch gekennzeichnet, daß die gegenüberliegenden Seiten der Lippen aneinander befestigt sind.

3. Mantel nach Anspruch 1,
dadurch gekennzeichnet, daß die gegenüberliegenden Seiten der Lippen wenigstens teilweise mit lösbaren Verbindungsmitteln (14a,14b) versehen sind.

4. Mantel nach einem der Ansprüche 1 bis 3,
dadurch gekennzeichnet, daß das Zwischenteil (3a) der Fugenebene aus wenigstens zwei Abschnitten besteht, deren allgemeine Richtung wenigstens annähernd quer zur Dicke der Mantelwand verläuft, die in unterschiedlicher Höhe angeordnet und miteinander durch eine Verbindungslinie verbunden sind, deren Richtung wenigstens annähernd parallel zur Dicke der Mantelwand verläuft.

5. Mantel nach einem der Ansprüche 1 bis 4, zum Schutz des Volumens gegen Flammen,
dadurch gekennzeichnet, daß dieser aus einem Material besteht, das aus einer Matte aus einer Vielzahl übereinandergelegter Gewebeschichten aus karbonisierbaren oxidierten organischen Fasern gebildet wurde, wobei wenigstens eine Seite der Matte mit einem Bindemittel auf Silikongrundlage beschichtet ist.

6. Verfahren zur Herstellung des nach einem der Ansprüche 1, 2, 4 und 5 näher bestimmten Mantels,
dadurch gekennzeichnet, daß es umfaßt:
- Herstellung eines Dorns (6), dessen äußere Form dem zu isolierenden Volumen entspricht;
- Aufbringung aufeinanderfolgender Schichten (7) eines mit einem polymerisierbaren Bindemittel imprägnierten flexiblen Materials auf dem Dorn, das nach der Polymerisation Elastizitätseigenschaften aufweist;
- Einfügung mindestens eines Trennelements (8) zwischen den aufeinanderfolgenden Schichten des flexiblen Materials, dessen dünner Querschnitt dem Zwischenteil der Fugenebene entspricht, wobei das Trennelement aus einem Material besteht, an dem das polymerisierbare Bindemittel nicht haftet;
- Polymerisation des Bindemittels;
- Anbringung von Schnitten (9,11) in der Dicke der Schichten an den jeweiligen Endlinien (3b,3c) des Querschnitts der Fugenebene beiderseits des Trennelements, und
- Beseitigung des Trennelements und Abnahme des Mantels vom Dorn durch elastisches Spreizen der so gebildeten Lippen.

7. Verfahren nach Anspruch 6,
dadurch gekennzeichnet, daß zunächst Schnitt (9) entsprechend Endlinie (3b) angebracht, durch die das Zwischenteil (3a) mit der Außenfläche (2a) des Mantels verbunden wird, dann das Trennelement (8) entnommen und schließlich Schnitt (11) angebracht wird, der Endlinie (3c) entspricht, durch die das Zwischenteil (3a) mit der Innenfläche (2b) des Mantels verbunden wird.

8. Verfahren nach Anspruch 6, zur Herstellung eines Mantels, dessen Zwischenteil (3a) der Fugenebene wenigstens zwei Abschnitte umfaßt, deren allgemeine Richtung wenigstens annähernd quer zur Dicke der Mantelwand verläuft, und die paarweise miteinander durch eine Verbindungslinie verbunden sind, deren Richtung wenigstens annähernd parallel zur Dicke verläuft,
dadurch gekennzeichnet, daß es umfaßt:
- Einfügung von wenigstens zwei Trennelementen (8A,8B) zwischen die aufeinanderfolgenden Schichten (7) des flexiblen Materials, dessen dünne Querschnitte jeweils den Abschnitten des Zwischenteils entsprechen;
- nach der Polymerisation des Bindemittels dann Anbringung der Schnitte (9,11,15), die jeweils den Endlinien und den Verbindungslinien des Querschnitts der Fugenebene entsprechen.

9. Verfahren nach Anspruch 8,
dadurch gekennzeichnet, daß es umfaßt:
- zunächst Anbringung des Schnitts entsprechend Endlinie (3b), durch die der erste Abschnitt mit der Außenfläche (2a) des Mantels verbunden wird;
- Beseitigung des ersten Trennelements (8A);
- Anbringung des Schnitts (15) entsprechend der Verbindungslinie zwischen dem ersten und zweiten Abschnitt;
- Beseitigung des zweiten Trennelements (8B);
- analog dazu nacheinander Anbringung der Schnitte (15) entsprechend den anderen Verbindungslinien und eventuelle Beseitigung des dritten bis letzten Trennelements, dann Anbringung von Schnitt (11) entsprechend Endlinie (3c), durch die der letzte Abschnitt mit der Innenfläche (2b) des Mantels verbunden wird.

10. Verfahren zur Herstellung des unter einem der Ansprüche 1, 3, 4 und 5 näher bestimmten Mantels, dadurch gekennzeichnet, daß es umfaßt:
- Herstellung eines Dorns (6), dessen äußere Form dem zu isolierenden Volumen entspricht;
- Aufbringung aufeinanderfolgender Schichten (7) eines mit einem polymerisierbaren Bindemittel imprägnierten flexiblen Materials auf dem Dorn, das nach der Polymerisation Elastizitätseigenschaften aufweist;
- Einfügung wenigstens eines Trennelements (14a,14b) zwischen den aufeinanderfolgenden Schichten des flexiblen Materials, dessen dünner Querschnitt dem Zwischenteil der Fugenebene entspricht, wobei das Trennelement aus zwei zusammenwirkenden Schichten eines Schnellbefestigungsmittels mit zusammenwirkenden Schlingen und Häkchen besteht;
- Polymerisation des Bindemittels und
- Anbringung der Schnitte (9,11) entsprechend den Endlinien (3b,3c) des Querschnitts der Fugenebene beiderseits des Trennelements.

11. Verfahren nach Anspruch 10,
dadurch gekennzeichnet, daß zunächst die Anbringung von Schnitt (9) entsprechend Endlinie (3b) erfolgt, durch die das Zwischenteil (3a) mit der Außenfläche (2a) des Mantels verbunden wird, dann die beiden Schichten (14a,14b) des Schnellbefestigungsmittels auselnandergespreizt und Schnitt (11) entsprechend Endlinie (3c) angebracht wird, durch die das Zwischenteil (3a) mit der Innenfläche (2b) des Mantels verbunden wird.

12. Verfahren nach Anspruch 11, zur Verwirklichung eines Mantels, dessen Zwischenteil (3a) der Fugenebene wenigstens zwei Abschnitte hat, deren allgemeine Richtung wenigstens annähernd quer zur Dicke der Mantelwand verläuft und die paarweise durch eine Verbindungslinie verbunden sind, deren Richtung wenigstens annähernd parallel zur Dicke verläuft,
dadurch gekennzeichnet, daß es umfaßt:
- Einfügung von wenigstens zwei Trennelementen (14a,14b) zwischen den aufeinanderfolgenden Schichten (7) des flexiblen Materials, dessen dünne Querschnitte jeweils den Abschnitten des Zwischenteils entsprechen, wobei jedes Trennelement aus zwei zusammenwirkenden Schichten eines Schnellbefestigungsmaterials mit zusammenwirkenden Schlingen und Häkchen besteht;
- nach der Polymerisation des Bindemittels Anbringung der Schnitte (9,11,15) entsprechend den Endlinien und den Verbindungslinien des Querschnitts der Fugenebene.

13. Verfahren nach Anspruch 12,
dadurch gekennzeichnet, daß es umfaßt:
- zunächst Anbringung von Schnitt (9) entsprechend der Endlinie, durch die der erste Abschnitt mit der Außenfläche des Mantels verbunden wird;
- Lösen der Schichten des ersten Trennelements;
- Anbringung von Schnitt (15) entsprechend der Verbindungslinie zwischen dem ersten und zweiten Abschnitt;
- Lösen der Schichten des zweiten Trennelements;
- analog dazu nacheinander Anbringung der Schnitte (15) entsprechend den anderen Verbindungslinien und gegebenenfalls Lösen der Schichten des dritten bis letzten Trennelements, dann
- Anbringung von Schnitt (11) entsprechend der Endlinie, durch die der letzte Abschnitt mit der Innenfläche des Mantels verbunden wird.

14. Verfahren nach einem der Ansprüche 6 bis 13,
dadurch gekennzeichnet, daß die äußere Form von Dorn (6) gleich der des zu schützenden Gegenstandes (1) ist, an dem der Mantel durch elastisches Spreizen der Lippen des Spalts angebracht wird.

15. Verfahren nach einem der Ansprüche 6 bis 14, zur Verwirklichung eines Flammenschutzmantels,
dadurch gekennzeichnet, daß das auf dem Dorn aufgebrachte flexible Material eine Matte ist, die aus einer Vielzahl übereinandergelegter Gewebeschichten aus karbonisierbaren oxidierten organischen Fasern besteht und von der wenigstens eine Seite mit einem Bindemittel auf Silikongrundlage beschichtet ist.
